# DEMANDE DE BREVET EUROPEEN

(11) **EP 2 383 674 A1**
(43) Date de publication de la demande: **02.11.2011**
(21) Numéro de dépôt: 11164505.7
(22) Date de dépôt: 02.05.2011
(51) Int. Cl.: G06F 21/00, H04L 9/32, H04L 29/06, G06F 12/14

(54) **Dispositif amovible sécurisé et / ou de sécurisation, serveur, et procédé de verrouillage d'une entité informatique correspondants**

(30) Priorité: 30.04.2010 FR 1053385
(71) Demandeur: S2MI, 03100 Montlucon (FR)
(72) Inventeur: Mouttet, Guillaume, 03600 Commentry (FR); Buffard, Boris, 03310 Villebret (FR)
(74) Mandataire: Ermeneux, Bertrand

(57) **Abrégé**

L'invention concerne un dispositif amovible comprenant un support de stockage de données, apte à être physiquement connecté à un terminal hôte comprenant des moyens d'accès à un réseau informatique, ledit dispositif présentant un élément d'identification unique.

Selon l'invention, un tel dispositif comprend :
- des moyens d'obtention d'une donnée d'authentification destinés à être mis en oeuvre lorsque ledit dispositif est dans un état de connexion, où ledit support communique avec ledit terminal hôte ;
- des moyens de formation d'une donnée de sécurité à partir dudit élément d'identification et de ladite donnée d'authentification ;
- des moyens de transfert via ledit terminal hôte de ladite donnée de sécurité vers un serveur accessible par ledit réseau.

L'invention concernant également un procédé de verrouillage d'une entité informatique mettant en oeuvre un tel dispositif amovible.

## Description

### 1. Domaine de l'invention

Le domaine de l'invention est celui de l'informatique.

Plus précisément, l'invention concerne un procédé de verrouillage de données stockées sur une entité informatique, notamment un terminal ou une clé USB (acronyme de "Universal Serial Bus" en anglais), permettant une sécurisation de ces données, et un dispositif amovible ainsi qu'un serveur convenant pour la mise en oeuvre de ce procédé de verrouillage.

Un domaine connexe de l'invention est celui des télécommunications.

### 2. Etat de la technique

L'usage des clés USB et des ordinateurs portables s'est largement répandu dans le domaine des activités économiques et de la vie privée.

On constate parallèlement une progression des vols de ces outils informatiques, et également une augmentation de la copie et de l'utilisation non autorisées des données personnelles d'utilisateurs de clés USB et d'ordinateurs portables, le plus souvent à des fins mercantiles.

Il existe donc une demande pour des solutions de sécurisation des données personnelles stockées sur une clé USB ou un ordinateur portable.

On a ainsi proposé des outils logiciels permettant de protéger les données personnelles sensibles contenues sur ces entités informatiques par un mot de passe. Certaines applications connues permettent par ailleurs de transformer les données de façon à les faire apparaitre sous une forme chiffrée.

Un inconvénient de cette technique est qu'un mot de passe reste à la merci des pirates informatiques ou de logiciels espions. D'autre part, des programmes de déchiffrement toujours plus performants sont rendus disponibles régulièrement.

On connait également une technique destinée à protéger un ordinateur, qui impose de connecter un matériel spécifique, tel qu'une carte à puce, une clé USB dédiée, un générateur de code aléatoire, ou un téléphone portable, sur un port de cet ordinateur pour pouvoir l'utiliser. Cette technique agit généralement au niveau du système d'exploitation, dont elle prévient le démarrage si le matériel spécifique n'est pas connecté à l'ordinateur.

Cette technique présente cependant de nombreux inconvénients.

Elle offre en effet une piètre sécurité si le matériel spécifique est subtilisé avec l'ordinateur.

Un autre inconvénient de cette technique est que les données stockées sur un disque dur de l'ordinateur peuvent être lues et copiées facilement en montant ce disque dur sur un autre ordinateur.

Encore un inconvénient de cette technique est que cette protection peut être contournée en démarrant un système d'exploitation rudimentaire présent sur l'ordinateur, tel le DOS (acronyme de "Disk Operating System" en anglais).

En outre elle n'apporte pas de solution à la sécurisation de données stockées sur une clé USB.

### 3. Objectifs de l'invention

L'invention a donc notamment pour objectif de pallier les inconvénients de l'état de la technique cités ci-dessus.

Plus précisément l'invention a pour objectif, dans au moins un mode de réalisation particulier de l'invention, de fournir une technique de verrouillage d'une entité informatique, et notamment d'un terminal ou d'un support de stockage de données amovible, qui soit fiable et permette de sécuriser efficacement les données stockées sur cette entité.

Un objectif de l'invention est également de proposer une telle technique qui soit non falsifiable et/ou non contournable.

Un autre objectif de l'invention est de fournir une telle technique qui soit simple à mettre en oeuvre.

Encore un objectif de l'invention est de fournir une telle technique qui soit d'un coût de revient réduit.

### 4. Exposé de l'invention

Ces objectifs, ainsi que d'autres qui apparaitrons par la suite sont atteints à l'aide d'un dispositif amovible comprenant un support de stockage de données, apte à être physiquement connecté à un terminal hôte comprenant des moyens d'accès à un réseau informatique, ledit dispositif présentant un élément d'identification unique.

Dans le cadre de l'invention, on entend notamment par le terme "unique", qu'il n'existe pas d'autre dispositif amovible sensiblement de même type possédant un élément d'identification identique.

Selon l'invention, un tel dispositif comprend
- des moyens d'obtention d'une donnée d'authentification destinés à être mis en oeuvre lorsque ledit dispositif est dans un état de connexion, où ledit support communique avec ledit terminal hôte ;
- des moyens de formation d'une donnée de sécurité à partir dudit élément d'identification et de ladite donnée d'authentification ;
- des moyens de transfert via ledit terminal hôte de ladite donnée de sécurité vers un serveur accessible par ledit réseau.

Ainsi, l'invention propose, de façon inédite, de sécuriser les données enregistrées sur un dispositif amovible, tel qu'une clé USB, en cas de perte ou de vol du dispositif, en transmettant de façon automatique à un serveur distant une donnée de sécurité, lorsque ce dispositif amovible est connecté sur un terminal hôte ayant un accès à un réseau informatique, de façon à alerter ce serveur de cette connexion et solliciter une procédure de verrouillage immédiat de ces données via le réseau.

On note que de façon astucieuse la donnée d'authentification choisie par le propriétaire du dispositif amovible, par exemple un mot de passe, qui permet d'annihiler le processus de verrouillage des données, n'est pas conservée sur le dispositif amovible, mais sur le serveur, ce qui la rend indétectable. Par ailleurs cette donnée de sécurité combine deux données complexes, dont un élément d'identification unique du dispositif, ce qui garantit son unicité, et limite les risques que cette protection soit déjouée.

En outre, la mise en place d'une communication avec un serveur a pour conséquence de dissuader les voleurs susceptibles d'être identifiés par l'intermédiaire de leur adresse de connexion.

D'autre part, un dispositif amovible selon l'invention permet également de déclarer simplement le vol ou la perte d'un terminal auprès d'un serveur dédié, en le connectant sur n'importe quel terminal hôte.

Selon un mode de réalisation particulier, un tel dispositif amovible comprend :
- des moyens de réception, dans ledit état de connexion, d'une donnée d'activation transmise par ledit serveur, générée en fonction de ladite donnée de sécurité ;
- des moyens de verrouillage dudit dispositif comprenant des moyens de chiffrement et/ou de suppression d'au moins une donnée stockée dans une zone mémoire dudit support, destinés à être activés si ladite donnée d'activation comprend une consigne d'activation desdits moyens de chiffrement et/ou de suppression.

On verrouille ainsi directement au moins une partie des données stockées sur le dispositif amovible à partir du serveur. Il peut notamment s'agir d'un chiffrement de ces données, ou "cryptage" selon une terminologie abusive, ou de leur effacement.

Selon un mode de réalisation particulier de l'invention, ladite donnée de sécurité est en outre formée à partir d'un élément d'identification d'un terminal associé de façon biunivoque audit dispositif.

On dispose ainsi d'un moyen d'identification unique et non falsifiable du terminal associé. On évite par ailleurs tout risque d'erreur sur l'identité du terminal associé.

Préférentiellement, ledit élément d'identification dudit terminal comprend une donnée d'identification du châssis et/ou de la coque dudit terminal.

Cette donnée d'identification est par exemple présente sur une plaque signalétique solidaire du châssis et/ou de la coque.

L'identité du terminal étant liée à un numéro de série d'un composant matériel du terminal qui n'est pas stocké dans une mémoire de ce composant, elle ne peut donc pas être usurpée par des manipulations logicielles.

Selon un aspect particulier de l'invention, ledit élément d'identification dudit terminal comprend au moins un numéro d'identification d'un composant matériel appartenant au groupe comprenant au moins :
- adresse MAC dudit terminal ;
- numéro de série d'une carte mère dudit terminal ;
- numéro de série d'un processeur dudit terminal ;
- numéro de série d'un disque dur dudit terminal.

Notamment, l'élément d'identification du terminal peut, dans au moins un mode de réalisation particulier de l'invention, résulter d'une combinaison de numéros d'identification de composant matériel.

Selon un mode de réalisation particulier de l'invention, ladite donnée d'authentification est obtenue à partir d'une information biométrique.

De façon alternative, la donnée d'identification peut également être un mot de passe, que l'on saisit de manière classique à l'aide d'un clavier.

De façon avantageuse, ledit support de stockage de données ou ledit dispositif forme une clé USB.

L'invention apporte donc une solution au problème de la sécurisation des données stockées sur une clé USB. D'autre part, elle offre un outil de sécurisation des données enregistrées sur un terminal, qui est pratique, peu encombrant et d'un prix de revient réduit.

Selon un aspect particulier de l'invention, un tel dispositif amovible comprend des moyens de communication par téléphonie mobile, et ledit élément d'identification unique dudit dispositif comprend un code IMEI (acronyme de "International Mobile Equipment Identity" en anglais) propre auxdits moyens de communication.

Une mémoire de masse d'un téléphone portable peut ainsi également être sécurisée, et/ou utilisée pour sécuriser un terminal.

L'invention concerne également un procédé de verrouillage à distance d'une entité informatique, tel qu'un terminal, apte à communiquer avec un serveur via un réseau informatique, comprenant :
- une étape d'alerte dudit serveur comprenant :
   - une étape de connexion physique d'un dispositif amovible, comprenant des moyens de stockage de données et présentant un élément d'identification unique, à un terminal hôte présentant des moyens d'accès audit réseau ;
   - une étape d'obtention d'une donnée d'authentification ;
   - une étape de transmission audit serveur d'une donnée de sécurité formée à partir dudit élément d'identification unique, de ladite donnée d'authentification, et d'un élément d'identification dudit premier terminal ;
- une étape de vérification de ladite donnée de sécurité par ledit serveur, comprenant une étape de comparaison de ladite donnée de sécurité avec des données prédéterminées stockées sur ledit serveur;
- une étape conditionnelle de transmission d'une donnée d'activation vers ladite entité ;
- une étape de verrouillage de ladite entité, comprenant une étape de chiffrement et/ou de suppression d'au moins une donnée stockée dans une zone mémoire de ladite entité, exécutée si ladite donnée d'activation est reçue par ladite entité.

On peut envisager de verrouiller à distance par ce procédé des données stockées sur une entité informatique telle que par exemple un ordinateur portable ou tout autre type de terminal informatique connu, une clé USB, un téléphone portable, ..., à la première connexion de l'entité informatique au réseau. La transmission de la donnée d'activation peut être réalisée par tout moyen de communication numérique connu, et par exemple par voie téléphonique.

Selon un aspect particulier de l'invention, ladite entité formant terminal, ladite donnée d'activation est générée lors de ladite étape conditionnelle de transmission seulement si ladite donnée de sécurité correspond à l'une desdites données prédéterminées.

Corrélativement, si l'entité est un dispositif périphérique externe amovible d'un terminal, tel qu'une clé USB, une donnée d'activation sera générée à condition que ladite donnée de sécurité diffère de chacune des données sécurisées prédéterminées stockées sur le serveur, définies à partir de l'élément d'identification unique d'un dispositif amovible référencé et de la donnée d'authentification secrète choisie par le propriétaire de ce dispositif.

Dans un mode de réalisation particulier de l'invention, l'étape de transmission comprend une étape d'obtention par ledit serveur d'une adresse IP ("Internet Protocol") affectée à ladite entité ou audit terminal hôte accédant audit réseau mettant en oeuvre le protocole de communication IP.

Le serveur peut ainsi communiquer avec l'entité directement par Internet, ou via le terminal hôte s'il s'agit par exemple d'une clé USB.

La connaissance de cette adresse IP peut en outre permettre de faciliter la recherche de l'entité perdue et/ou dérobée.

Selon un aspect particulier de la présente invention, un tel procédé de verrouillage comprend une étape d'obtention d'une information de géo-localisation de ladite entité formant terminal.

Cette information de géo-localisation peut notamment être fournie par un module de réception d'un signal GPS (sigle désignant par contraction un "système de positionnement mondial par satellites") intégré au terminal.

Le procédé permet ainsi avantageusement de repérer avec précision le lieu de connexion du terminal volé.

Dans un mode de réalisation particulier de la présente invention, ladite étape d'obtention est limitée à une durée impartie, et une valeur par défaut est attribuée à ladite donnée d'authentification dans le cas où aucune donnée d'authentification n'est obtenue dans ladite durée impartie.

On peut ainsi par exemple procéder au verrouillage de l'entité après dix secondes, si aucune donnée d'authentification n'est fournie dans ce délai par la personne en possession de l'entité. La quantité de données stockées sur l'entité et non protégées par chiffrement pouvant éventuellement être copiées ou exportées pendant ce délai reste donc limitée.

L'invention a également pour objet un serveur pour la mise en oeuvre d'un procédé de verrouillage tel que décrit ci-dessus comprenant des moyens de vérification d'une donnée de sécurité reçue d'un dispositif amovible pour validation, par comparaison de ladite donnée de sécurité avec des données prédéterminées stockées sur ledit serveur, et des moyens de transmission d'une donnée d'activation vers ladite entité.

Un tel serveur peut être par exemple avantageusement hébergé par un distributeur de terminaux et/ou de dispositifs amovibles sécurisés au moyen de l'invention. Il peut en outre être envisagé de rendre accessible ce serveur à un service de police, pour faciliter le repérage et la restitution du matériel volé.

La présente invention concerne encore un système de verrouillage d'une entité informatique via un réseau informatique comprenant:
- un terminal hôte présentant des moyens d'accès audit réseau ;
- un dispositif amovible tel que décrit ci-dessus, apte à communiquer avec ledit terminal hôte lorsqu'il est physiquement connecté audit terminal hôte ;
- un serveur tel que décrit précédemment intégré audit réseau.

### 5. Liste des figures

D'autres caractéristiques et avantages de l'invention apparaitrons plus clairement à la lecture de la description suivante de deux modes de réalisation de l'invention, donnés à titre de simples exemples illustratifs et non limitatifs, et des dessins annexés parmi lesquels :
- la figure 1 représente un premier mode de réalisation d'un système de verrouillage d'un terminal incorporant un dispositif amovible selon l'invention ;
- la figure 2 illustre, sous forme d'un diagramme synoptique, un exemple de procédé de verrouillage d'un terminal mis en oeuvre par le système présenté figure 1 ;
- la figure 3 illustre un autre exemple de mise en oeuvre d'un verrouillage réalisé sur une clé USB amovible ;
- la figure 4 représente un organigramme détaillant de façon schématique les étapes d'un procédé conforme à l'invention de verrouillage de la clé USB présenté figure 3.

### 6. Description détaillée de l'invention

### 6.1 Rappel du principe de l'invention

Le principe de l'invention repose donc notamment sur la mise en oeuvre d'une communication, via Internet, entre un dispositif amovible présentant un élément d'identification unique et d'un serveur permettant de contrôler un code de sécurité unique et infalsifiable, de façon à protéger, en cas de perte ou de vol, des données stockées sur une entité informatique, telle qu'un ordinateur ou une clé USB, en verrouillant ces données dès que l'entité informatique accède à Internet.

On note que, dans un mode de réalisation particulier de l'invention, le dispositif amovible et l'entité informatique peuvent être confondus.

### 6.2 Exemple de mode de réalisation de l'invention

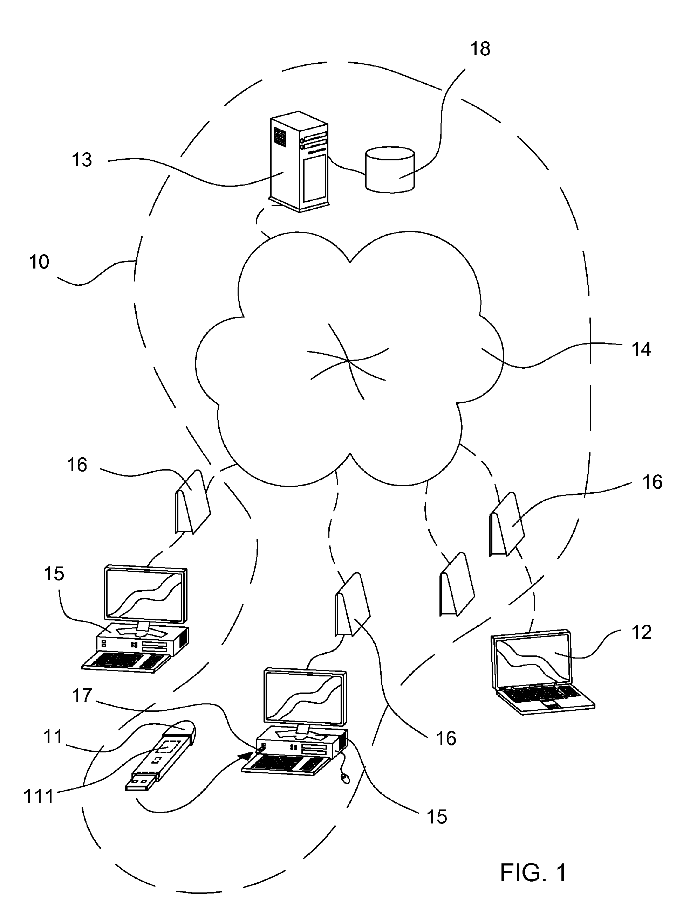

On a illustré sur la figure 1, un premier mode de réalisation d'un système de verrouillage 10 d'un terminal informatique 12 incorporant un dispositif amovible 11 selon l'invention.

Le dispositif amovible 11 se présente sous la forme d'une clé USB 11 comprenant une mémoire flash 111 dans laquelle est stocké un premier fichier contenant un élément d'identification unique de la clé, encore appelé numéro unique de la clé dans la suite de la description, sous une forme chiffrée numériquement.

Cet élément d'identification unique a été attribué à la clé USB 11 par son constructeur. Il se présente dans ce mode de réalisation particulier de l'invention sous la forme d'une succession de chaînes de caractères binaires ou hexadécimales et comporte, conformément à la norme USB, une partie commune à toutes les clés de sa série, comprenant l'identifiant du constructeur et un identifiant de la série, et une partie, dite « partie unique », spécifique à cette clé, constituée d'un numéro de série unique et d'une chaine de description des caractéristiques de cette clé.

La mémoire flash 111 comprend également un deuxième fichier dans lequel est enregistré un élément d'identification unique du terminal 12, formé dans ce mode de réalisation particulier de l'invention, du numéro de série de la coque du terminal inscrit sur une plaque signalétique fixée sur cette coque, et d'un code propre attribué au constructeur du terminal.

Le système 10 comprend par ailleurs un serveur dédié 13 relié au réseau Internet 14 et requiert un terminal hôte 15, par exemple un ordinateur de bureau, donnant accès au réseau Internet 14.

Le terminal hôte peut également être une station de travail, un assistant personnel, ou PDA (acronyme de "Personnal Data Assistant" en anglais) ou tout appareil informatique intégrant une carte mère équipée d'un microprocesseur, offrant un accès à Internet, par exemple via une passerelle de communication 16, et disposant d'un port USB 17 pour le raccordement de la clé USB.

Lorsqu'il réalise la perte ou du vol de l'entité formant terminal 12, typiquement un ordinateur personnel portable, le propriétaire du terminal 12 signale cette perte ou ce vol en connectant la clé USB 11 sur le port 17 d'un terminal hôte 14 directement accessible.

En connectant la clé, un programme de sécurité résidant dans la mémoire 111 est exécuté de façon automatique.

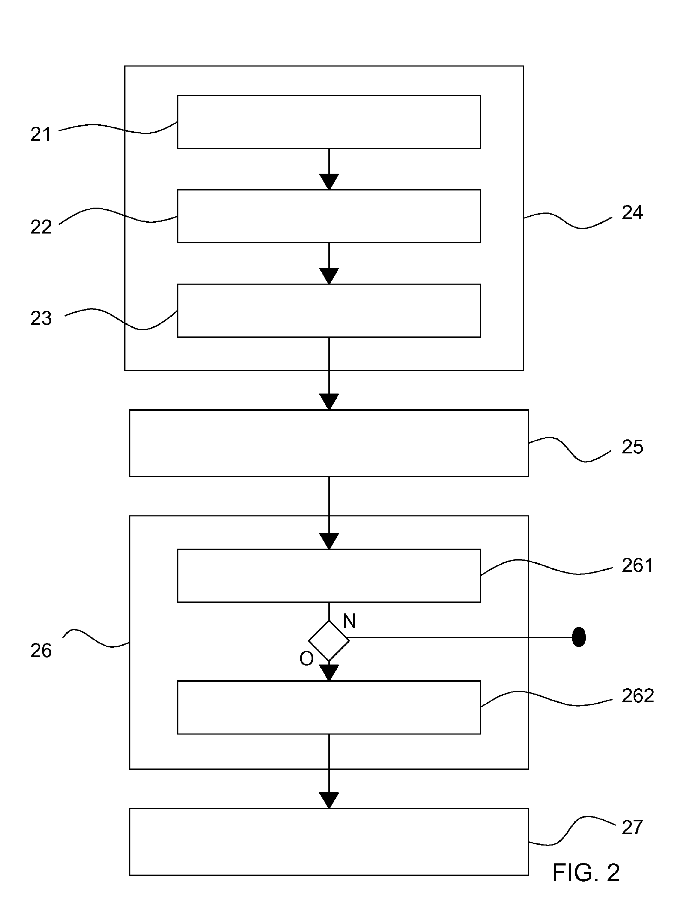

Un exemple de procédé de verrouillage à distance du terminal 12, proposé par l'invention est maintenant décrit en détail au regard de la figure 2.

Après une étape de connexion physique 21 de la clé USB 11 au terminal hôte 15, le programme de sécurité demande au propriétaire de s'authentifier en saisissant un mot de passe, via le clavier du terminal hôte, dans une deuxième étape 22.

Dans une variante de ce mode de réalisation particulier de l'invention, l'authentification du propriétaire du terminal peut mettre en oeuvre un capteur biométrique, par exemple pour capturer une empreinte digitale, ou une image de la rétine ou de l'iris, ou faire appel à une reconnaissance vocale, ....

Une fois un mot de passe obtenu, le programme de sécurité forme, à l'étape 23, une donnée de sécurité à partir du numéro unique de la clé, du mot de passe saisi et de l'élément d'identification du terminal 12, qu'il transmet via le réseau Internet 14 au serveur 13, en utilisant les ressources du terminal hôte 15.

Il convient de noter que les identifiants de la clé et du terminal sont avantageusement associés de façon biunivoque au sein de la donnée de sécurité. Ainsi pour signaler le vol du terminal, il est impératif d'utiliser la clé 11 et de fournir le mot de passe assigné par le propriétaire du terminal. On supprime par conséquent tout risque d'une utilisation frauduleuse de la clé, mais également tout risque de confusion de cette clé avec une autre clé, et donc de verrouillage d'un autre terminal que celui qui a été dérobé ou perdu. Par mesure de précaution, on veillera cependant bien évidemment à ne pas conserver la clé et une copie du mot de passe avec le terminal.

L'enchainement des étapes 21 à 23 constitue ainsi une première étape 24 permettant d'alerter le serveur 13 du vol du terminal, ou du moins, dans le cas où le mot de passe contenu dans la donnée de sécurité est incorrect, d'une utilisation anormale de la clé USB.

Dans une étape 25, après réception de la donnée de sécurité, une application est exécutée sur le serveur 13. Cette application vérifie, en sollicitant un système de gestion de base de données intégré au serveur 13, si la donnée de sécurité transmise est conforme à au moins une donnée enregistrée dans une table spécifique dans une base de données 18 hébergée sur le serveur 13.

Plus précisément cette application extrait de la donnée de sécurité successivement l'élément d'identification de la clé, le mot de passe renseigné, et l'élément d'identification du terminal, puis les compare aux champs correspondants de chaque triplet prédéterminé de la table, dans lesquels sont consignés respectivement l'identifiant unique d'une clé, le mot de passe défini par le propriétaire de la clé et un numéro de série de la coque du terminal associé à cette clé, permettant d'identifier ce terminal de manière unique.

Par la suite, dans une étape conditionnelle 26, dès que le terminal 12 est connecté au réseau Internet, une application client résidant dans ce terminal va être exécutée en premier lieu dans une étape 261, afin de transmettre au serveur 13 l'adresse IP qui a été attribué au terminal 12 et un élément d'identification du terminal, par exemple le numéro de série de la coque du terminal 12 ou son adresse MAC, de façon à s'identifier auprès du serveur. Cette application client utilise des informations préprogrammées permettant d'accéder au serveur, tel que l'adresse de la passerelle et du serveur, les paramètres de désactivation des pare-feu et les paramètres de proxy. Afin de ne pas affaiblir la sécurité du serveur face aux attaques, ces informations sont avantageusement régulièrement mise à jour sur le terminal.

On note que plus généralement cette application est prévue pour émettre l'adresse IP de connexion et un élément d'identification du terminal vers le serveur 13 à chaque fois que le terminal se connecte sur Internet.

En second lieu, dans le cas où la donnée de sécurité est conforme à un triplet de la table, le serveur 13 va émettre en retour une donnée d'activation à destination du terminal, dans une étape 262.

Cette donnée d'activation comprend notamment une consigne d'activation. Cette consigne se présente sous la forme d'un fichier qui permet d'exécuter, dans une dernière étape 27 de verrouillage du terminal, une application qui efface les données stockées sur le disque dur du terminal.

Dans des variantes de ce mode de réalisation, il peut également être envisagé de verrouiller le terminal en transformant les données du disque dur à l'aide d'une application de chiffrement et/ou en agissant sur le système de base d'entrée/sortie du terminal, communément appelé BIOS (acronyme de "Basic Input/output System" en anglais) pour le rendre inopérant.

### 6.3 Autre exemple de mode de réalisation de l'invention

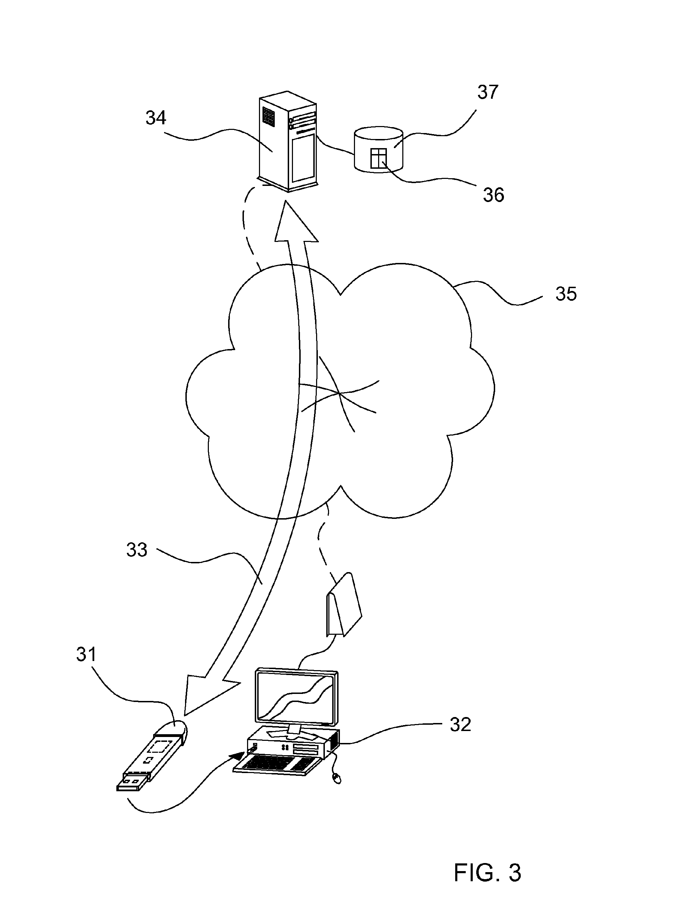

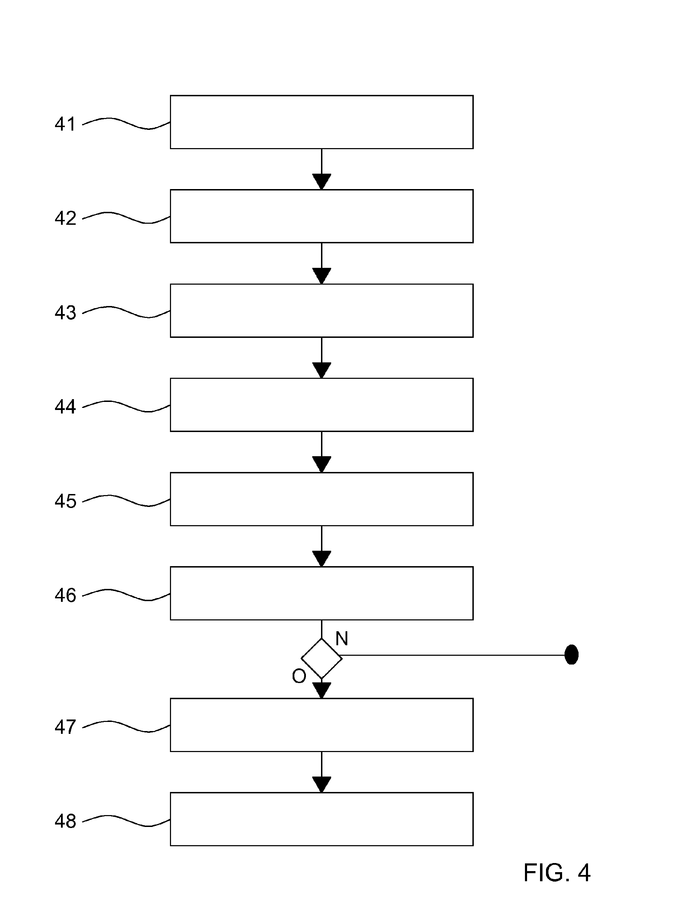

Les figures 3 et 4 se réfèrent au verrouillage des données d'un dispositif amovible selon l'invention, mis en oeuvre sous la forme d'une clé USB 31.

Comme on peut le voir sur la figure 3, lorsque la clé USB 31 est insérée dans le port d'un terminal 32 connecté à Internet 35, il va s'établir, de façon automatique, une communication, symbolisée par la double flèche 33, avec un serveur 34 assurant la sécurisation de cette clé.

Il apparaîtra plus clairement par la suite que cette communication s'établit quel que soit le terminal auquel on connecte physiquement la clé UB 31, pour autant qu'il présente un accès à Internet.

On comprend donc que les données de la clé USB 31 peuvent être verrouillées au premier raccordement de celle-ci sur un port de n'importe quel terminal ayant accès à Internet. Cette disposition se révèle particulièrement avantageuse, car elle empêche toute personne qui trouve ou vole la clé USB d'accéder au données stockées sur la clé, dès lors que la perte ou le vol de la clé a été déclaré.

La figure 4 est un organigramme qui détaille les étapes d'un procédé de verrouillage des données de la clé USB 31.

Dans une première étape 41, facultative, la perte ou le vol de la clé est déclaré par le propriétaire de la clé, par exemple auprès d'un centre d'appel, ou sur un site web dédié.

Une donnée unique comprenant un paramètre d'identification et un paramètre d'authentification de la clé 31 est exportée vers une table 36 d'une base de données 37 hébergée par le serveur 34, dans une deuxième étape 42. Le paramètre d'identification de la clé est dans ce mode de réalisation de l'invention, l'élément d'identification unique de la clé attribué par son constructeur, et le paramètre d'authentification est un mot de passe choisi au préalable par le propriétaire de la clé. Dans une variante de ce mode de réalisation, l'étape 42 peut être réalisée une seule fois par le propriétaire de la clé, lors de la mise en service de la clé.

A partir de cette étape 42, dès que la clé est connectée physiquement à un terminal possédant un accès à Internet, tel que le terminal 32, une première application, ou un composant logiciel, stockée sur la clé 31 sollicite de façon automatique, comme à chaque connexion de la clé 31 sur un terminal, une authentification par un mot de passe, via le terminal 32 (étape 43).

Avantageusement, une durée limitée, par exemple de 20 secondes, est impartie pour cette authentification, de façon à ne pas laisser du temps pour lire les données stockées sur la clé. Si aucune donnée d'authentification n'est saisie durant cette durée impartie, une valeur par défaut par exemple "0" lui est attribuée.

A l'étape 44, une donnée de sécurité est formée par la clé à partir de l'élément d'identification unique de la clé attribué par son constructeur, stocké dans un fichier sauvegardé dans une zone mémoire de la mémoire flash de la clé, et de la donnée d'authentification renseignée par l'utilisateur de la clé ou attribuée par défaut.

Une deuxième application résidant sur la clé transmet cette donnée de sécurité et l'adresse IP du terminal par Internet au serveur 34, en exploitant les ressources de l'interface réseau du terminal 32, dans une étape 45.

A l'étape 46, La donnée d'authentification de la donnée de sécurité transmise par la clé USB est comparée par le serveur 34 à celle référencée dans la table 36, pour un même élément d'identification unique de clé.

Si les données d'authentification concordent, ce qui peut notamment être le cas si le propriétaire de la clé a retrouvé la clé entre temps, le serveur reste passif.

Dans le cas contraire, le serveur 34 génère une donnée d'activation, sous forme d'un fichier contenant une consigne d'activation, qu'il transmet, dans une étape 47, à destination du terminal 32, dont l'adresse IP est désormais connue du serveur. Cette donnée d'activation reçue est alors interceptée par la clé et interprétée par une troisième application incorporée sur la clé.

A l'étape 48, la troisième application qui a détecté la consigne d'activation verrouille les données personnelles stockées sur la mémoire flash de la clé, en chiffrant à l'aide d'un algorithme de chiffrement convenable certaines données, indexées à cet effet par le propriétaire lors de leur sauvegarde sur la clé, et en supprimant les autres données.

### 6.4 Autres caractéristiques optionnelles et avantages de l'invention

Dans des variantes des modes de réalisation de l'invention détaillés ci-dessus, il peut également être prévu :
- d'équiper le dispositif amovible et/ou le terminal associé d'un équipement de géolocalisation émettant sur instruction du serveur, afin de faciliter sa récupération ;
- de choisir indifféremment et/ou aléatoirement comme élément d'identification du terminal son numéro de châssis, son adresse MAC, un numéro de série d'un disque dur, un numéro de série d'un processeur ou un numéro de série de la carte mère, ou une combinaison d'au moins deux de ces numéros d'identification de composant matériel, afin de compliquer le contournement du processus de sécurisation mis en place par l'invention.

Les modes de réalisation ici décrits n'ont pas pour but de limiter la portée de l'invention. En conséquence, il pourra y être apporté de nombreuses modifications sans sortir du cadre de celle-ci telle que définie par les revendications

## Revendications

1. Dispositif amovible comprenant un support de stockage de données, apte à être physiquement connecté à un terminal hôte comprenant des moyens d'accès à un réseau informatique, ledit dispositif présentant un élément d'identification unique, **caractérisé en ce qu'**il comprend :
- des moyens d'obtention d'une donnée d'authentification destinés à être mis en oeuvre lorsque ledit dispositif est dans un état de connexion, où ledit support communique avec ledit terminal hôte ;
- des moyens de formation d'une donnée de sécurité à partir dudit élément d'identification et de ladite donnée d'authentification ;
- des moyens de transfert via ledit terminal hôte de ladite donnée de sécurité vers un serveur accessible par ledit réseau.

2. Dispositif amovible selon la revendication 1, **caractérisé en ce qu'**il comprend :
- des moyens de réception, dans ledit état de connexion, d'une donnée d'activation transmise par ledit serveur, générée en fonction de ladite donnée de sécurité ;
- des moyens de verrouillage dudit dispositif comprenant des moyens de chiffrement et/ou de suppression d'au moins une donnée stockée dans une zone mémoire dudit support, destinés à être activés si ladite donnée d'activation comprend une consigne d'activation desdits moyens de chiffrement et/ou de suppression.

3. Dispositif amovible selon la revendication 1, **caractérisé en ce que** ladite donnée de sécurité est en outre formée à partir d'un élément d'identification d'un terminal associé de façon biunivoque audit dispositif.

4. Dispositif amovible selon la revendication 3, **caractérisée en ce que** ledit élément d'identification dudit terminal comprend une donnée d'identification du châssis et/ou de la coque dudit terminal.

5. Dispositif amovible selon l'une quelconque des revendications 3 et 4, **caractérisé en ce que** ledit élément d'identification dudit terminal comprend au moins un numéro d'identification d'un composant matériel appartenant au groupe comprenant au moins :
- adresse MAC dudit terminal ;
- numéro de série d'une carte mère dudit terminal ;
- numéro de série d'un processeur dudit terminal ;
- numéro de série d'un disque dur dudit terminal.

6. Dispositif amovible selon l'une quelconque des revendications 1 à 5, **caractérisé en ce que** ladite donnée d'authentification est obtenue à partir d'une information biométrique.

7. Dispositif amovible selon l'une quelconque des revendications 1 à 6, **caractérisé en ce que** ledit support de stockage de données ou ledit dispositif forme une clé USB.

8. Dispositif amovible selon l'une quelconque des revendications 1 à 6, **caractérisé en ce qu'**il comprend des moyens de communication par téléphonie mobile, et **en ce que** ledit élément d'identification unique dudit dispositif comprend un code IMEI propre auxdits moyens de communication.

9. Procédé de verrouillage à distance d'une entité informatique, tel qu'un terminal, apte à communiquer avec un serveur via un réseau informatique, **caractérisé en ce qu'**il comprend :
- une étape d'alerte dudit serveur comprenant :
- une étape de connexion physique d'un dispositif amovible, comprenant des moyens de stockage de données et présentant un élément d'identification unique, à un terminal hôte présentant des moyens d'accès audit réseau ;
- une étape d'obtention d'une donnée d'authentification ;
- une étape de transmission audit serveur d'une donnée de sécurité formée à partir dudit élément d'identification unique, de ladite donnée d'authentification, et d'un élément d'identification dudit premier terminal ;
- une étape de vérification de ladite donnée de sécurité par ledit serveur, comprenant une étape de comparaison de ladite donnée de sécurité avec des données prédéterminées stockées sur ledit serveur;
- une étape conditionnelle de transmission d'une donnée d'activation vers ladite entité ;
- une étape de verrouillage de ladite entité, comprenant une étape de chiffrement et/ou de suppression d'au moins une donnée stockée dans une zone mémoire de ladite entité, exécutée si ladite donnée d'activation est reçue par ladite entité.

10. Procédé de verrouillage selon la revendication 9, **caractérisé en ce que**, ladite entité formant terminal, ladite donnée d'activation est générée lors de ladite étape conditionnelle de transmission seulement si ladite donnée de sécurité correspond à l'une desdites données prédéterminées.

11. Procédé de verrouillage selon l'une quelconque des revendications 9 et 10, **caractérisé en ce que** ladite étape de transmission comprend une étape d'obtention par ledit serveur d'une adresse IP affectée à ladite entité ou audit terminal hôte accédant audit réseau mettant en oeuvre le protocole de communication IP.

12. Procédé de verrouillage selon l'une quelconque des revendications 10 et 11, **caractérisé en ce qu'**il comprend une étape d'obtention d'une information de géo-localisation de ladite entité formant terminal.

13. Procédé de verrouillage selon l'une quelconque des revendications 9 à 12, **caractérisé en ce que** ladite étape d'obtention est limitée à une durée impartie,
et **en ce qu'**une valeur par défaut est attribuée à ladite donnée d'authentification dans le cas où aucune donnée d'authentification n'est obtenue dans ladite durée impartie.

14. Serveur pour la mise en oeuvre d'un procédé selon l'une des revendications 9 à 13, **caractérisé en ce qu'**il comprend des moyens de vérification d'une donnée de sécurité reçue d'un dispositif amovible pour validation, par comparaison de ladite donnée de sécurité avec des données prédéterminées stockées sur ledit serveur, et des moyens de transmission d'une donnée d'activation vers ladite entité.

15. Système de verrouillage d'une entité informatique via un réseau informatique comprenant :
- un terminal hôte présentant des moyens d'accès audit réseau ;
- un dispositif amovible selon l'une quelconque des revendications 1 à 8, apte à communiquer avec ledit terminal hôte lorsqu'il est physiquement connecté audit terminal hôte ;
- un serveur selon la revendication 14 intégré audit réseau.
